# EUROPEAN PATENT APPLICATION

(11) **EP 1 890 468 A1**
(43) Date of publication of application: **20.02.2008**
(21) Application number: 06017184.0
(22) Date of filing: 17.08.2006
(51) Int. Cl.: H04M 1/57, H04M 1/725, G08B 21/02, H04M 11/04, H04M 1/60, H04M 1/2745

(54) **Method, wireless baby phone and system for pairing a wireless baby phone with an electronic device**

(71) Applicant: Vodafone Holding GmbH, 40213 Düsseldorf (DE)
(72) Inventor: Janssen, Marcel, 6121 HG Born (NL)
(74) Representative: Müller, Thomas

(57) **Abstract**

The present invention relates to a method for pairing a wireless baby phone with at least one electronic device, particularly with a mobile telephone, whereby the baby phone has a dial-in functionality to allow electronic device to communicate with the baby phone, comprising the following steps performed by the baby phone:
a) receiving a call of the at least one electronic device,
b) extracting the caller line identification of the received call,
c) storing the caller line identification into a storage device of the baby phone and
d) pairing the baby phone with the at least one electronic device using the stored caller line identification.

The invention relates further to a wireless baby phone for pairing the wireless baby phone with at least one electronic device, particularly with a mobile telephone, and to a system comprising an inventive wireless baby phone and at least one electronic device, particularly a mobile telephone.

## Description

The present invention relates to a method for pairing a wireless baby phone with at least one electronic device, particularly with a mobile telephone. The invention relates further to a wireless baby phone for pairing the wireless baby phone with at least one electronic device, particularly with a mobile telephone, and to a system, comprising at least one electronic device and at least one wireless baby phone, for pairing the at least one electronic device and the at least one wireless baby phone.

Wireless baby phones are known in the prior art in a variety of products. The following wireless baby phones categories are currently offered on the market: 27MC baby phones, radio baby phones, DECT baby phones (DECT = Digital Enhanced Cordless Telecommunications) and GSM baby phones (GSM = Global System for Mobile Communications). Baby phones are used to control a baby, when the baby is located in a different place as the controlling person. Therefore the baby phone comprises a detecting device to measure movements, heat and/or noise of the baby and/or in the surrounding area of the baby. After measuring a movement, heat or noise, the baby phone sends an alert message to a receiving unit. The receiving unit can be an electronic device like a mobile phone, which is coupled with the baby phone. The receiving unit comprises an output device to indicate the alert message sent by the baby phone.

To pair a baby phone with an electronic device, especially with a mobile telephone, the line identification number of the electronic device has to be known by the baby phone. Therefore the baby phones of the prior art comprises an input unit, especially a keyboard, to enter the line identification number of an electronic device. The keyboards must a functionality to enter numbers into a storage device of the baby phone. These kinds of baby phones are technically complex and cost-intensive in manufacturing. It is further complex and it takes time to enter the line identification number of an electronic device into the baby phone.

The problem to be solved by the present invention is thus to overcome these drawbacks of the prior art solutions. The problem to be solved is to create a method for pairing at least one electronic device with a baby phone is an easy and cheap way. A further aim is to create an easy and cheap baby phone and a system for paring the baby phone with at least one electronic device.

The problems of the invention are solved by a method for pairing a wireless baby phone with at least one electronic device with the features according to claim 1, with a wireless baby phone for pairing the wireless baby phone with at least one electronic device with the features according to claim 13 and with a system for pairing a wireless baby phone with at least one electronic device with the features according to claim 21. Advantages, features, details, aspects and effects of the invention arise from the dependent claims and the description. Features and details, which are described in connection with the method for pairing a wireless baby phone with at least one electronic device counts as well for the baby phone and the system for pairing the wireless baby phone with at least one electronic device, and vice versa.

According to a first aspect the present invention relates to method for pairing a wireless baby phone with at least one electronic device, particularly with a mobile telephone, whereby the baby phone has a dial-in functionality to allow electronic device to communicate with the baby phone, comprising the following steps performed by the baby phone:
a) receiving a call of the at least one electronic device,
b) extracting the caller line identification of the received call,
c) storing the caller line identification into a storage device of the baby phone and
d) pairing the baby phone with the at least one electronic device using the stored caller line identification.

An electronic device according to the invention is a device which is able to send and receive radio based messages, which is able to set up a bi-directional connection for an audio or a video call or sending messages like SMS-, MMS-, email-messages or the like. The electronic device is especially a mobile telephone according to the GSM-, UMTS- (UMTS = Universal Mobile Telecommunication System) or CDMA-(CDMA = Code Division Multiple Access) standard. The electronic device can futher be a mobile telephone according to the TDMA standard (TDMA = Time Division Multiple Access), the EVDO standard (EVDO = Evolution-Data Optimized), the EDGE(GSM) standard (EDGE = Enhanced Data Rates for GSM), the HSDPA (UMTS) standard (HSDPA = High Speed Downlink Packet Access) or other radio technologies. In another embodiment the electronic device can be a fixed line phone or a VoIP-phone.

The baby phone extracts after receiving a call of at least one electronic device in a first step the caller line identification of the received call. The caller line identification can be for example the telephone number of a net based telephone, like a DECT telephone or the MSIDSN (MSIDSN = Mobile Subscriber ISDN Number) of a mobile telephone.
After extracting the caller line identification of the received call the baby phone stores the caller line identification into a storage device of the baby phone. The baby phone can store the caller line identification in special address list. After storing the caller line identification into the storage device the baby phone pairs itself with the at least one electronic device using the stored caller line identification. To pair itself with the at least one electronic device the baby phone calls the at least one electronic device.

This method presents a very easy way to store a caller line identification of at least one electronic device into a baby phone to pair the baby phone with the electronic device. After storing the caller line identification of the calling electronic device into the storage device of the baby phone, it is possible to connect the baby phone and the electronic device with each other and to send messages to each other.

It is not necessary to indicate the caller line identification of the electronic device at the baby phone, because the baby phone can be reached only by persons who know the dial-in number of the baby phone. Therefore the owner of the baby phone can give the dial-in number of the baby phone to a certain person, who calls the baby phone with his electronic device. The baby phone extracts and stores the caller line identification of the known caller automatically. In that way the baby phone can build an address list of persons, who are allowed to dial-in to the babyphone. On the other hand the babyphone can use the stored caller line identifications to send messages to electronic devices belonging to the caller line identifications.

This method provides a cheap and easy way to pair a baby phone and one or more electronic device(s) with each other.

It is advantageous, if the baby phone pairs the at least one calling electronic device with the baby phone automatically, after checking by a checking device that the caller line identification of the at least one calling electronic device is stored into the storage device of the baby phone. That means, a calling electronic device gets access to the baby phone, if the baby phone registers that the caller line identification of the calling electronic device is stored in the address list of the baby phone. The baby phone allows the known calling electronic device to dial-in to the baby phone. This method avoids that persons can dial-in to the baby phone, because they know the number, but are not allowed to dial-in, because the parents of the baby do not want the person to dial-in. Therefore the address list can cleared and the caller line identifications belonging to unwanted persons can be deleted from the address list.

Preferred is a method, whereby the baby phone pairs itself with the at least one electronic device by calling the stored caller line identification of the at least one electronic device, especially after detecting an alert signal by a detecting device. That means the baby phone can dial a stored caller line identification to reach an electronic device. The baby phone can dial an further stored caller line identification after a predefined period of time, if the electronic device belonging to the caller line identification is not reachable. That means the baby phone retries a call to the electronic device of a known person. The retry can be a call via a lower quality channel. That means, if a video call can not be set up, the baby phone tries to set up an audio call, if an audio call can not be set up, the baby phone tries to set up a message call. If all these calls are not possible, a retry schedule can be initiated. Therefore the baby phone can start a next call after a minute, a second retry after five minutes, a third retry after 15 minutes and so on. It can be predetermined which caller line identification the baby phone dials first. Advantageous is, that the baby phone dials a stored caller line identification, if the detecting device of the baby phone detects an alert signal. The detecting device has sensor elements to measure movements, heat developments or noise caused by the baby or the surrounding area of the baby. If the detecting device measures sound intensities, temperatures or movements which exceed predefined limits, the baby phone dials at least one stored caller line identification. The minute the detecting device of the baby phone measures an alert signal, the baby phone contacts an electronic device of a known person.

According to a preferred step of the method, the baby phone indicates the caller line identification of an incoming call of an electronic device by an output device of the baby phone. The output device can be a loudspeaker or a display, whereby a display is preferred, because it causes no noise, to avoid awakening the baby. The display indicates the caller line identification, so that the user of the baby phone, normally the parents, can recognise who is calling the baby phone.

After recognising a call it is advantageous that pressing of a pairing button pairs the calling electronic device with the baby phone to communicate with each other. Through this step the user of the baby phone can pair very easily the baby phone with a calling party. It is further in advantageous, that the baby phone stores the caller line identification of the calling electronic device in the storage device when a storing button, especially the pairing button, is being pressed for a predetermined time. Especially, when the pairing button has the functionality of the storing button, it is very easy to connect the baby phone and the calling electronic device und to store the caller line identification of the calling electronic device in the address list of the storage device of the baby phone. One button can be used for both pairing the baby phone and the calling electronic device and storing the caller line identification. The predetermined time can be a few seconds, like 3 or 4 seconds. The pairing button can be set up in a way, that pressing the pairing button for more than the predetermined time pairs the baby phone and the calling electronic device and stores the caller line identification or pressing the pairing button for more than the predetermined time stores only the caller line identification.
It is advantageous, when the predetermined time can be set up through the baby phone.
A further favoured step of the method is that an alerting device of the baby phone shows that an electronic device is calling. The baby phone can have a load speaker to give an acoustic alarm or a light, especially a blinking light, which announces the calling party.

It can be favoured as well, that pressing the storing button, especially the pairing button, for a predetermined time erases stored caller line identifications from the address list. That means, the storing button, which can be the pairing button, erases one or more caller line identifications, if pressed for more the a few seconds, like 6 or 7 seconds. The same pairing or storing button can be used to pair, store and erase a caller line identification. The baby phone can be build very easily, just with one button for all the pre described actions.

A further preferred step of the method is thus, that the baby phone initiates a video call to at least one electronic device belonging to one or more stored caller line identification(s) after detecting an alert signal by a detecting device. The detecting device measures with one or more sensor elements movements, heat developments or noise caused by the baby or the surrounding area of the baby. If the detecting device measures sound intensities, temperatures or movements which exceed predefined limits, the baby phone initiates a video call to at least one electronic device belonging to one or more stored caller line identification(s). Immediately after measuring an alert signal through the detecting device the baby phone contacts an electronic device of one or more known person(s). The baby phone has at least one camera for filming the baby and/or the surrounding area of the baby. After initiation of the video call by the baby phone the called party can watch the baby on the display of his electronic device. It is preferred that the video call is been transmitted via UMTS-technology or the like. Therefore the baby phone is set up with an UMTS-card or the like. Further, the calling party can talk to the baby. e.g. to put the baby at ease or to talk to the baby. A calling party can share emotions with the baby in form of saying a couple of words to the baby before they go to bed.

The baby phone can check if a video call can not be set up, so that in this case the baby phone initiates an audio call to an electronic device belonging to one or more stored caller line identification(s). The baby phone tries first to send a video call. If this is not possible, because the receiving electronic device is not able to show videos, the baby phone tries in the next step to start an audio call. It is possible that the baby phone stores the abilities of the calling electronic devices in the storage device of the baby phone. It is advantageous, that the baby phone first checks if a caller line identification is stored in the storage device and if the belonging electronic device is able to receive video calls. If the baby phone checks that one party is not able to receive video calls, the baby phone can look for the next stored caller line identification and party, respectively. The baby phone can see on the basis of the caller line identification, if the electronic device can be able to receive a video call, or not. DECT phones are normally not able to receive a video call, UMTS phones or CDMA phones are able to receive video calls.

In a further advantageous step of the method, the baby phone sends a message to an electronic device belonging to one or more stored caller line identification(s), after checking that a video call and/or an audio call can not be set up. This step is favoured, if the baby phone can not set up a connection to the electronic device of the called electronic device via video or audio call. The message can be a SMS-message, a MMS-message, an email or the like. For example, a SMS-text can be predetermined and can be stored in the storage device of the baby phone. The text can be as follows: "Please call the baby phone" or the like. The content of the message can be predefined by the baby phone or the at least one electronic device. According to a second aspect of the invention the solution is been solved by an wireless baby phone for pairing the wireless baby phone with at least one electronic device, particularly with a mobile telephone, with a dial-in functionality to allow electronic device to communicate with the baby phone, with receiving means for receiving a call of the at least one electronic device, with extracting means for extracting the caller line identification of the received call, with a storage device for storing caller line identifications of electronic devices in an address list and pairing means, especially a pairing button, for pairing the baby phone with the at least one electronic device using the stored caller line identification. To execute the pre described method the baby phone has appropriate means.
After receiving a call of at least one electronic device through the receiving means the baby phone extracts in a first step through the extracting means the caller line identification of the received call. After extracting the caller line identification of the received call the baby phone stores the caller line identification into a storage device of the baby phone. The baby phone can store the caller line identification in special address list. After storing the caller line identification into the storage device the baby phone pairs through his pairing means itself with the at least one electronic device using the stored caller line identification. The pairing means can be set up as pairing button. The storage device is coupled to a storing button, which can be the pairing button, if pressed for more than a few seconds.

Further is a wireless baby phone preferred, whereby the baby phone has a checking device for checking that the caller line identification of the at least one calling electronic device is stored in the storage device of the baby phone.

A calling electronic device gets access to the baby phone if the baby phone registers that the caller line identification of the calling electronic device is stored in the address list of the baby phone. The baby phone can be set up in the way that it allows only calling electronic devices with known caller line identifications to dial-in to the baby phone. The checking device avoids that persons can dial-in to the baby phone, because they know the number, but are not allowed to dial-in, because the parents of the baby do not want the person to dial-in. The user of the baby phone, in particular the parents, can give permissions to the caller line identifications to dial-in to the baby phone. These permissions can be changed whenever the user it wants. The user of the baby phone, which is the person who is responsible for the baby, can define which party has access to the baby phone for the next time or which party will be called from the baby phone. The user of the baby phone can clear the address list and can delete the caller line identifications belonging to unwanted persons from the address list.

A wireless baby phone is favoured, whereby the baby phone has an output device to indicate the caller line identification of an incoming call of an electronic device. The output device can be a loud speaker. Preferred is an output device which is a display, because it causes no noise. A display avoids awakening the baby, when the caller line identification is indicated. The display indicates the caller line identification, so that the user of the baby phone, normally the parents, can recognise who is calling the baby phone.

A wireless baby phone that has an alerting device for showing that an electronic device is calling is further advantageous. The alerting device of the baby phone can be a load speaker to give an acoustic alarm or a light, especially a blinking light, to announce the calling party.

A wireless baby phone is preferred, whereby the baby phone has detecting means, especially sensor means, to detect movements, heat developments and/or noise, and transmission means to send an alert message to the at least one electronic device. The detecting device measures with one or more sensor elements movements, heat developments or noise caused by the baby or the surrounding area of the baby. If the detecting device measures sound intensities, temperatures or movements which exceed predefined limits, the baby phone initiates an alert message to at least one electronic device belonging to one or more stored caller line identification(s). That means immediately after measuring an alert signal through the detecting device the baby phone contacts an electronic device of one or more known person(s). Therefore the baby phone has transmission means to send an alert message to the at least one electronic device. The transmission means are able to send text messages, audio calls or video calls to an electronic device. The sensor means can be a microphone to measure noise of the baby, a temperature sensor to measure heat developments or movement sensor to measure movements of the baby. The detecting means can be further a camera for filming the baby and/or the surrounding area of the baby. The detecting means like the microphone, the movement sensor or the temperature sensor can be coupled to the camera of the baby phone. After detecting an alert signal through the microphone, the movement sensor or the temperature sensor the baby phone starts to film the baby with the camera and initiates a video call to a electronic device belonging to a known caller line identification. After initiation of the video call by the baby phone the called party can watch the baby on the display of his electronic device. It is preferred that the video call is been transmitted via UMTS-technology or the like. Therefore the baby phone is set up with an UMTS-card or the like.

Further a wireless baby phone is favoured, whereby the pairing button of the baby phone has a storage functionality to store the caller line identification of the calling electronic device when being pressed for a predetermined time. By pressing the pairing button for a predetermined time, it is very easy to store the caller line identification into the storage device of the baby phone. The wireless baby phone does not need a complex keyboard to store caller line identifications. The advantage of the wireless baby phone is that it removes the need for entering the caller line identification into the storage device of the baby phone. The baby phone needs neither a keyboard nor a display.

Further advantageous is a wireless baby phone, whereby the pairing button has an erasing functionality to erase stored caller line identification from the address list, particularly by pressing the pairing button for a predetermined time. It is favoured that the pairing button, which is used to pair the baby phone with at least one electronic device and/or store the caller line identification, is used as well for erasing one or more caller line identifications out of the storage device. Erasing a caller line identification out of the address list of the baby phone can be done by pressing the pairing button for a few seconds, like 6 or 7 seconds. The pairing button can have the functionality to scroll between at least to stored caller line identifications in the address list of the baby phone. After a caller line identification has been chosen the caller line identification can be erased from the address list by pressing the pairing button for a predefined period of time.
Futher a baby phone is favoured, whereby the baby phone has at least one camera to film the baby and to initiate a video call to at least one electronic device belonging to one or more stored caller line identification(s) after detecting an alert signal by a detecting device. The baby phone has a loudspeaker. Thereby it is possible for a calling party to speak to the baby and to put the baby at ease.

According to the last aspect of the invention the problem is been solved by a system comprising a pre described wireless baby phone and at least one electronic device, particularly a mobile telephone, whereby the wireless baby phone of the system is formed to perform the pre described method for pairing the wireless baby phone with the at least one electronic device, particularly with the mobile telephone.

In the following same additional notes to the method and to the wireless baby phone are described.
If an electronic device belonging to a first caller line identification can not be reached by the baby phone, the baby phone calls another stored caller line identification.

When the wireless baby phone detects an alert as illustrated below, an alert notification will be send to the at least one electronic device belonging to dialled stored caller line identification.

An alert is generated when a sound in the room is detected, e.g. if the sound level is higher or below a predefined volume.
An alert is generated when smoke is detected in the room, e.g. based on carbon monoxide measurement.
An alert is generated when movement is detected in the room.

An alert notification or message will send by the wireless baby phone by making a video call to the paired telephone, i.e. through a 3GPP-GSM or CDMA mobile phone, or a IP-soft-phone).
If a video call cannot be set-up, the wireless baby phone will make an audio call, and if that is not possible, a SMS will be send to the paired electronic device.
By establishing a video telephone or audio call, the caller is also able to talk to the baby, to the child or to people in the baby room.

When connecting the wireless baby phone on the mobile network, the wireless baby phone will get a telephone number, i.e. a 3GPP-GSM-MSISDN.
A caller of the wireless baby phone will make a telephone call to the wireless baby phone using this telephone, i.e. a fixed line telephone, a mobile phone by 3GPP-GSM or CDMA , a IP-soft-phone or a SIP-device.
When the call comes in the wireless baby phone, the user can see this, i.e. by a blinking light on the wireless baby phone. The user can pair the calling device with the wireless baby phone by pressing the pairing button for a few seconds, which is configurable. When pressed for a few seconds, the incoming caller line identification (caller line identification = CLI), i.e. 3GPP-GSM-MSISDN or SIP-ID, IP-address, is stored for future use in the storage device of the wireless baby phone. The advantage of this kind of pairing is that it removes the need for entering the CLI, i.e. the MSISDN on the wireless baby phone or any other device that has neither keyboard nor display.
Unpairing or erasing, respectively, the electronic device can be done by pressing the pairing button for a few more seconds when no call is incoming (idle state). The paired number will then be erased for the wireless baby phone.
The stored CLI can be used for several purposes, i.e.:
Automatic call answering: Storing the number in the list of numbers, the address list, for which the call is automatic pickup/answered. This enables that only connections are established with callers that are on the allowed list, preventing unwanted callers to be able to see what is going on in the baby room.
Alerting: Storing the number that will be used to set-up a video call to the paired device when an alert is generated by the wireless baby phone, or when a test button on the wireless baby phone is pressed by the user to see if the correct device is paired and to see if the wireless baby phone device is working correctly.
Alternative use in a mobile phone: The pairing principle can also be used in other situations, i.e. to store the telephone number of an incoming call under a quick dial button on a number wireless baby phone.

## Claims

1. Method for pairing a wireless baby phone with at least one electronic device, particularly with a mobile telephone, whereby the baby phone has a dial-in functionality to allow electronic device to communicate with the baby phone, comprising the following steps performed by the baby phone:
a) receiving a call of the at least one electronic device,
b) extracting the caller line identification of the received call,
c) storing the caller line identification into a storage device of the baby phone and
d) pairing the baby phone with the at least one electronic device using the stored caller line identification.

2. Method according to claim 1, **characterized in that** the baby phone pairs the at least one calling electronic device with the baby phone automatically, after checking by a checking device that the caller line identification of the at least one calling electronic device is stored into the storage device of the baby phone.

3. Method according to claim 1, **characterized in that** the baby phone pairs itself with the at least one electronic device by calling the stored caller line identification of the at least one electronic device, especially after detecting an alert signal by a detecting device.

4. Method according to any of claims 1 to 3, **characterized in that** the baby phone indicates the caller line identification of an incoming call of an electronic device by an output device of the baby phone.

5. Method according to any of claims 1 to 4, **characterized in that** pressing of a pairing button pairs the calling electronic device with the baby phone to communicate with each other.

6. Method according to any of claims 1 to 5, **characterized in that** the baby phone stores the caller line identification of the calling electronic device in the storage device when a storing button, especially the pairing button, is being pressed for a predetermined time.

7. Method according to any of claims 1 to 6, **characterized in that** an alerting device of the baby phone shows that an electronic device is calling.

8. Method according to any of claims 1 to 7, **characterized in that** pressing the storing button, especially the pairing button, for a predetermined time erases stored caller line identifications from the address list.

9. Method according to any of claims 1 or 8, **characterized in that** the baby phone initiates a video call to at least one electronic device belonging to one or more stored caller line identification(s) after detecting an alert signal by a detecting device.

10. Method according to claim 9, **characterized in that** the baby phone initiates an audio call to an electronic device belonging to one or more stored caller line identification(s), after checking that a video call can not be set up.

11. Method according to claim 9 or 10, **characterized in that** the baby phone sends a message to an electronic device belonging to one or more stored caller line identification(s), after checking that a video call and/or an audio call can not be set up.

12. Method according to claim 11, **characterized in that** the content of the message is predefined by the baby phone or the at least one electronic device.

13. Wireless baby phone for pairing the wireless baby phone with at least one electronic device, particularly with a mobile telephone, with a dial-in functionality to allow electronic device to communicate with the baby phone, with receiving means for receiving a call of the at least one electronic device, with extracting means for extracting the caller line identification of the received call, with a storage device for storing caller line identifications of electronic devices in an address list and pairing means, especially a pairing button, for pairing the baby phone with the at least one electronic device using the stored caller line identification.

14. Wireless baby phone according to claim 13, **characterized in that** the baby phone has a checking device for checking that the caller line identification of the at least one calling electronic device is stored in the storage device of the baby phone.

15. Wireless baby phone according to claim 13 or 14, **characterized in that** the baby phone has an output device to indicate the caller line identification of an incoming call of an electronic device.

16. Wireless baby phone according to any of claims 13 to 15, **characterized in that** the baby phone has an alerting device for showing that an electronic device is calling.

17. Wireless baby phone according to any of claims 13 to 16, **characterized in that** the baby phone has detecting means, especially sensor means, to detect movements, heat developments and/or noise, and transmission means to send a alert message to the at least one electronic device.

18. Wireless baby phone according to any of claims 13 to 17, **characterized in that** the pairing button has a storage functionality to store the caller line identification of the calling electronic device when being pressed for a predetermined time.

19. Wireless baby phone according to any of claims 13 to 18, **characterized in that** the pairing button has an erasing functionality to erase stored caller line identification from the address list, particularly by pressing the pairing button for a predetermined time.

20. Wireless baby phone according to any of claims 13 to 19, **characterized in that** the baby phone has at least one camera to film the baby and to initiate a video call to at least one electronic device belonging to one or more stored caller line identification(s) after detecting an alert signal by a detecting device.

21. System comprising a wireless baby phone according to any of the claims 13 to 20 and at least one electronic device, particularly with a mobile telephone, **characterized in that** the wireless baby phone of the system is formed to perform the method for pairing the wireless baby phone with the at least one electronic device, particularly with the mobile telephone, according to any of the claims 1 to 12.
